# FASCICULE DE BREVET EUROPEEN

(11) **EP 1 422 462 B1**
(45) Date de publication et mention de la délivrance du brevet: **25.10.2006**
(21) Numéro de dépôt: 03356180.4
(22) Date de dépôt: 18.11.2003
(51) Int. Cl.: F16L 37/084

(54) **Raccord rapide muni d'un dispositif de surpression intégré**
Schnellkupplung mit einer integrierten Druckentlastungsvorrichtung
Quick-acting fluid coupling with integral pressure relief feature

(30) Priorité: 19.11.2002 FR 0214466
(43) Date de publication de la demande: 26.05.2004
(73) Titulaire: STÄUBLI FAVERGES, 74210 Faverges (FR)
(72) Inventeur: Lacroix, Jean-Jacques, 74330 Lovagny (FR); Pastore, Olivier, 74210 Faverges (FR)
(74) Mandataire: Myon, Gérard Jean-Pierre

(56) Documents cités:
- US-A- 5 002 254
- US-A- 5 806 832

## Description

L'invention a trait à un raccord rapide pour la jonction amovible de canalisations de fluide sous pression.

Par le brevet FR-2 514 855, on connaît un raccord rapide qui comprend deux éléments mâle et femelle propres à s'emmancher axialement en provoquant l'ouverture d'un clapet monté dans le corps de l'élément femelle, ce corps étant équipé d'un bouton ou verrou chargé, monté à coulissement dans ce corps et percé d'une ouverture centrale pour l'emmanchement de l'élément mâle. La paroi de l'ouverture du verrou présente des dents décalées les unes par rapport aux autres le long d'un axe médian de cette ouverture, alors que l'élément mâle est pourvu d'un épaulement apte à reposer sélectivement contre l'une ou l'autre de ces dents. En configuration passante du raccord, une première dent du verrou maintient l'élément mâle en place dans l'élément femelle. Lors du déverrouillage du raccord, on déplace le verrou pour libérer l'élément mâle qui vient alors en appui sur la dent du verrou la plus proche du débouché de l'élément femelle.

Cet agencement classique donne satisfaction sur le plan de la robustesse et de la fiabilité.

Cependant, un ressort puissant doit être utilisé pour charger élastiquement le verrou vers une position dans laquelle il retient l'élément mâle, ce qui peut s'avérer gênant lors de la manipulation du verrou et lors de l'accouplement du raccord, car l'effort généré par le ressort doit être vaincu pour permettre l'introduction de l'élément mâle dans l'élément femelle.

On connaît, en outre, par les brevets FR-2 724 710 ou US-5,806,832, un raccord rapide comportant un élément femelle dans lequel est inséré un élément mâle. Un verrou prévu sur l'élément femelle comporte un organe d'accrochage associé à des billes venant s'engager dans une gorge de l'élément mâle afin de maintenir ces éléments en position d'accouplement. Lorsque, par un mouvement de translation du verrou, on dégage l'organe d'accrochage de la gorge afin de désaccoupler ces éléments, un dispositif de sécurité maintient les billes en position tant que la pression exercée par le fluide à l'intérieur des canalisations est élevée. Ce dispositif de sécurité comprend un piston soumis, d'une part, à l'action d'un ressort de rappel, et d'autre part, à l'effet de la pression exercée par le fluide circulant dans le raccord. Ces deux actions sont antagonistes et ont pour effet de maintenir le piston dans une position où il permet d'immobiliser l'élément mâle grâce aux billes tant que la pression interne reste élevée.

Un tel raccord présente toutefois des inconvénients :

Pour assurer que la pression sur un côté du piston est supérieure à la pression sur l'autre côté, le piston doit être équipé de deux joints d'étanchéité qui freinent son déplacement et s'opposent à l'action du ressort, ce qui peut perturber le fonctionnement du raccord.

C'est à ces inconvénients qu'entend plus particulièrement remédier l'invention en proposant un raccord entre des canalisations véhiculant des fluides sous pression dont le désaccouplement se fait en toute sécurité lorsque la pression à l'intérieur de l'élément mâle est faible.

A cet effet, l'invention a pour objet un raccord rapide pour la jonction amovible de deux canalisations parcourues par un fluide sous pression, ce raccord comprenant deux éléments mâle et femelle aptes à s'emmancher axialement l'un dans l'autre, le corps de l'élément femelle étant équipé d'un verrou chargé par des moyens élastiques, monté à coulissement dans le corps de l'élément femelle et percé d'une ouverture pour l'emmanchement de l'élément mâle ou d'une pièce déplacée par cet élément, la paroi de l'ouverture du verrou étant équipée de dents décalées l'une par rapport à l'autre, le long d'un axe médian de cette ouverture, alors que l'élément mâle ou la pièce précitée est pourvu d'un épaulement apte à reposer sélectivement contre l'une de ces dents. Ce raccord est caractérisé en ce qu'il comprend un organe de sécurité mobile par rapport au corps de l'élément femelle, soumis à l'action de la pression exercée par le fluide et pourvu d'une surface adaptée pour venir en appui sur une surface complémentaire du verrou et à bloquer le mouvement de ce verrou à l'encontre des moyens élastiques précités.

Grâce à l'invention, le verrou est bloqué dans une configuration où il empêche une libération anticipée de l'élément mâle tant que la surface de l'organe de sécurité est en appui sur la surface complémentaire du verrou. Le verrou ne peut libérer complètement l'élément mâle, inséré dans l'élément femelle, que lorsque ce mouvement de déverrouillage est rendu possible par le déplacement de l'organe de sécurité. On réalise ainsi un dispositif présentant un fonctionnement sécurisé et qui ne permet pas le désaccouplement, accidentel ou non, des éléments mâle et femelle lorsque le raccord est sous pression, ce qui pourrait blesser un utilisateur. Un tel raccord présente également une construction aisée, donc un coût relativement faible, car utilisant peu de pièces.

Selon des aspects avantageux mais non obligatoires de l'invention, le raccord incorpore une ou plusieurs des caractéristiques suivantes :
- L'organe de sécurité est mobile par rapport au corps de l'élément femelle, essentiellement sous l'effet de la pression exercée par le fluide et sous l'effet d'un effort de réaction exercé par le verrou. La commande en position de cet organe de sécurité, sous l'effet de la pression ou de la réaction du verrou, permet de n'obtenir son retour à une position qui libère le verrou que lorsque la pression exercée par le fluide à l'intérieur du raccord est faible, voire nulle.
- Les surfaces ménagées respectivement sur l'organe de sécurité et sur le verrou sont inclinées par rapport à la direction de déplacement relatif des éléments mâle et femelle et par rapport à la direction de coulissement du verrou dans le corps de l'élément femelle. Ces surfaces sont, de façon tout à fait avantageuse, inclinées vers un axe parallèle à l'axe longitudinal du raccord en direction de l'amont du raccord.
- L'organe de sécurité est formé par un piston se déplaçant selon une direction globalement parallèle à la direction de déplacement relatif des éléments mâle et femelle. Ce piston peut comporter un orifice adapté pour permettre le passage de l'élément mâle ou de la pièce déplacée par cet élément. Avantageusement, le piston coulisse dans une empreinte de guidage ménagée dans le corps de l'élément femelle.
- Le moyen de rappel du verrou est adapté pour provoquer la séparation des surfaces en appui du verrou et de l'organe de sécurité, lorsque la pression exercée par le fluide dans le raccord est en deçà d'une valeur pré-établie.
- Le corps de l'élément femelle comprend une partie principale dans laquelle est immobilisée une partie secondaire de l'élément femelle reliée à l'une des canalisations, cette immobilisation se faisant par accrochage de crans portés par la partie secondaire avec des crans complémentaires portés par la partie principale.
- Une pièce intermédiaire apte à recevoir le corps de l'élément mâle et pourvue de moyens de verrouillage de ce corps est prévue dans l'élément femelle, les moyens de verrouillage précités étant aptes à libérer le corps de l'élément mâle lorsque le verrou est déplacé sous l'effet des moyens élastiques précités. Cette pièce intermédiaire est avantageusement chargée élastiquement vers une position où les moyens de verrouillage précités ne sont pas actifs.

L'invention sera mieux comprise et d'autres avantages de celle-ci apparaîtront plus clairement à la lecture de la description qui va suivre de deux modes de réalisation d'un raccord conforme à l'invention, donnée uniquement à titre d'exemple et faite en se référant aux dessins annexés dans lesquels :
- la figure 1 est une coupe longitudinale d'un raccord conforme à l'invention dans une première position où ses éléments mâle et femelle sont accouplés, le fluide circulant entre ces deux éléments,
- la figure 2 est une coupe analogue à la figure 1, mais à plus petite échelle, dans une seconde position où les éléments mâle et femelle sont maintenus en configuration de décompression d'une canalisation raccordée sur l'élément mâle par pression sur le bouton ou verrou de retenue ; certains éléments sont tronqués pour la clarté du dessin,
- la figure 3 est une coupe analogue à la figure 1 mais à plus petite échelle, un verrou de blocage étant dans la même position qu'à la figure 2, alors qu'un organe de sécurité bloque le verrou lors d'une phase de diminution de la pression régnant dans la canalisation précitée,
- la figure 4 est une coupe analogue à la figure 2, alors que l'organe de sécurité est en position de repos, la pression interne étant faible, l'élément mâle pouvant être librement retiré du raccord,
- la figure 5 est une coupe longitudinale d'un raccord conforme à un second mode de réalisation de l'invention dans une configuration analogue à celle de la figure 1,
- la figure 6 est une coupe analogue à la figure 3 et à la même échelle pour le raccord de la figure 5, et
- la figure 7 est une coupe analogue à la figure 4 et à la même échelle pour le raccord des figures 5 et 6.

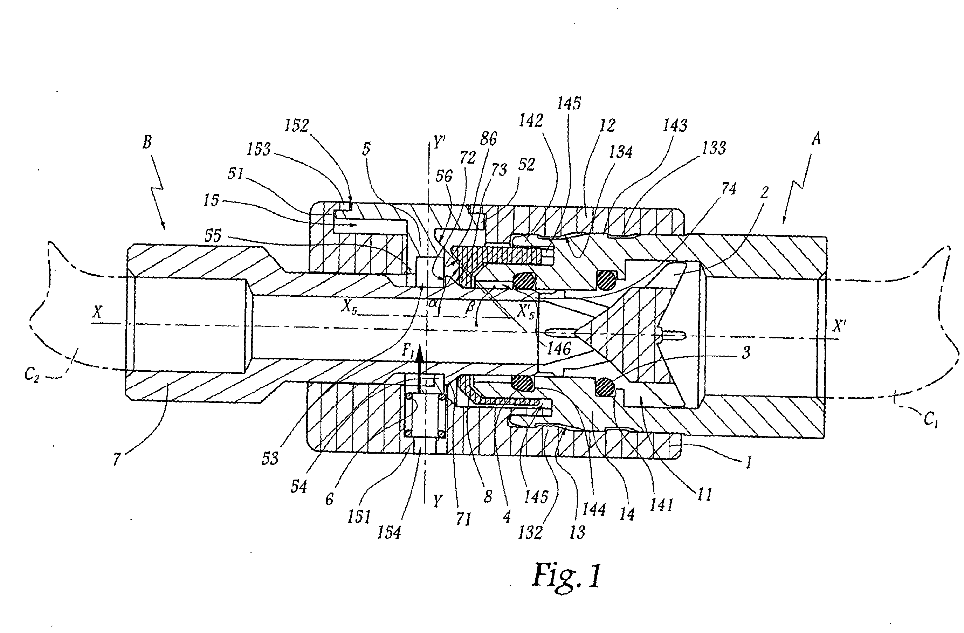

Le raccord représenté aux figures 1 à 4 comprend un élément femelle A et un élément ou embout mâle B raccordés respectivement à une canalisation amont C₁ et à une canalisation aval C₂. La canalisation amont C₁ est, elle même, raccordée à une source de fluide sous pression non représentée.

Le corps 1 de l'élément femelle est de forme externe globalement cylindrique et circulaire, centré sur un axe X-X' qui est également l'axe longitudinal d'un conduit 11 interne au corps 1 et dans lequel est disposé un clapet 2 mobile selon l'axe X-X'. Le corps 1 est bi-partite et comprend une partie principale 12 formant un alésage 13 dans lequel est immobilisée une partie secondaire 14 solidaire de la canalisation C₁. En pratique, le clapet 2 est monté dans la partie 14 qui définit une gorge 141 de réception d'un joint 3 d'appui étanche du clapet 2.

La surface radiale externe de la partie 14 est pourvue de crans 142 et 143 destinés à coopérer avec des crans 132 et 133 prévus sur la surface radiale interne 134 de l'alésage 13. La coopération des crans 132, 133, 142 et 143 permet une immobilisation ferme de la partie 14 dans l'alésage 13 de la partie 12.

En variante, l'immobilisation relative des parties 12 et 14 pourrait être obtenue par un vissage de ces parties qui sont avantageusement en métal.

La partie 14 définit une seconde gorge 144 de réception d'un joint 4 destiné à coopérer avec la surface radiale externe 75 du corps 7 de l'élément mâle B.

Le corps 1 est également pourvu d'un logement 15 s'étendant globalement dans la direction d'un axe Y-Y' perpendiculaire à l'axe X-X', c'est-à-dire radial. Le logement 15 est ménagé dans la partie 12 du corps 1. A l'intérieur du logement 15 est monté, à coulissement, un verrou 5 sur lequel un ressort 6 exerce un effort élastique F₁ dirigé à l'opposé du fond 151 du logement 15, c'est-à-dire en direction de son débouché 152. Le mouvement du verrou 5 sous l'effet de l'effort F₁ est limité par deux saillies 51 et 52 venant en appui contre le bord 153 du débouché 152. Le fond 151 du logement 15 est pourvu d'un orifice 154 reliant le logement 15 à l'atmosphère ambiante.

Le logement 15 croise le conduit 11 qui traverse la partie 12 de part en part.

Le verrou 5 est pourvu d'une ouverture transversale 53 centrée sur un axe X₅-X'₅ parallèle à l'axe X-X'. L'ouverture 53 est bordée par deux dents 54 et 55 qui s'étendent à partir de la circonférence de l'ouverture 53 en direction de l'axe X₅-X'₅. La dent 54 est la plus éloignée du débouché du conduit 11 du côté de l'embout mâle B, alors que la dent 55 est la plus proche de ce débouché.

Dans la configuration de la figure 1, et en l'absence d'effort exercé par un utilisateur sur le verrou 5, ce verrou est soumis à l'action du ressort 6, de telle sorte que sa dent 54 est insérée en arrière d'un épaulement 72 formé par une collerette 71 prévue à la périphérie du corps métallique 7 de l'embout mâle B. La collerette 71 est également pourvue d'une rampe inclinée 73 tronconique et convergente en direction de l'extrémité avant 74 du corps 7.

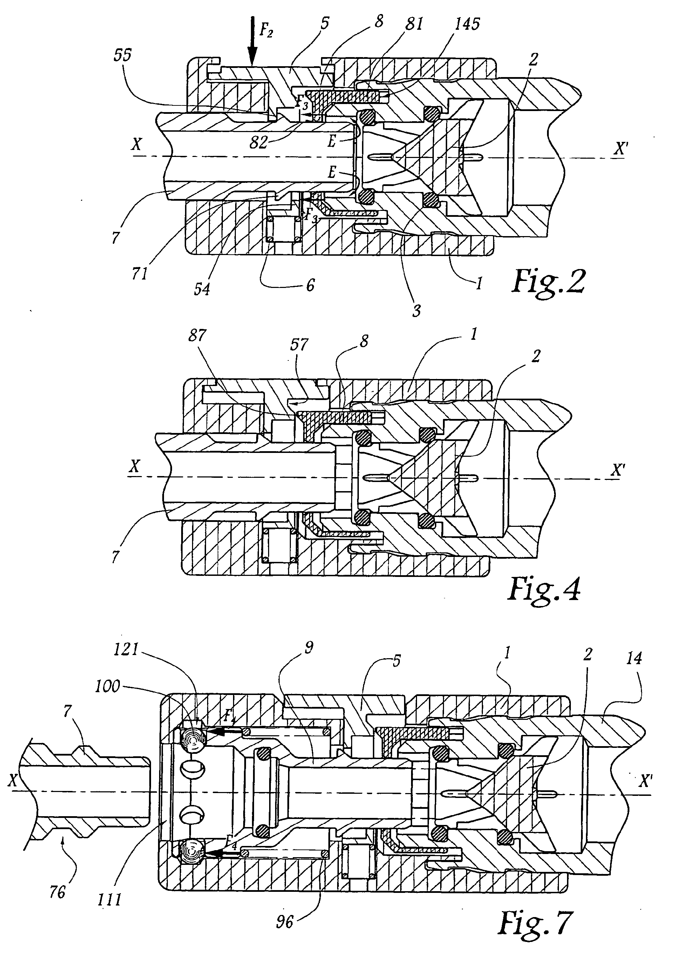

Lorsqu'il convient de déverrouiller le raccord, un effort F₂ est exercé sur le verrou 5, ce qui a pour effet d'escamoter la dent 54 de la trajectoire de retrait de la collerette 71, comme représenté à la figure 2. Sous l'effet de la pression régnant dans la canalisation C₂, le clapet est repoussé vers le joint 3. L'embout 7 se déplace, selon l'axe X-X', dans le même sens et la collerette 71 vient en appui contre la dent 55 du verrou ou bouton 5.

Un piston 8 est en place dans le conduit 11 du corps 1, ce piston pouvant coulisser dans la direction de l'axe X-X'. Le piston 8 comprend une jupe 81 engagée dans un logement 145 formé dans la partie 14 et dans une partie 112 du conduit 11 définie entre les parties 12 et 14 du corps 1. La coopération de la jupe 81 et du logement 145 permet de guider en translation le piston 8.

Ce piston 8 est pourvu d'une ouverture centrale 82 permettant le passage de l'embout 7, de telle sorte que le piston 8 est disposé autour de l'embout 7, à l'intérieur du conduit 11 et dans une partie de ce conduit définie par les pièces 12 et 14 dans les configurations des figures 1 à 4. Le fait que le corps 1 est bi-partite permet la mise en place du piston 8 et son emprisonnement dans le conduit 11.

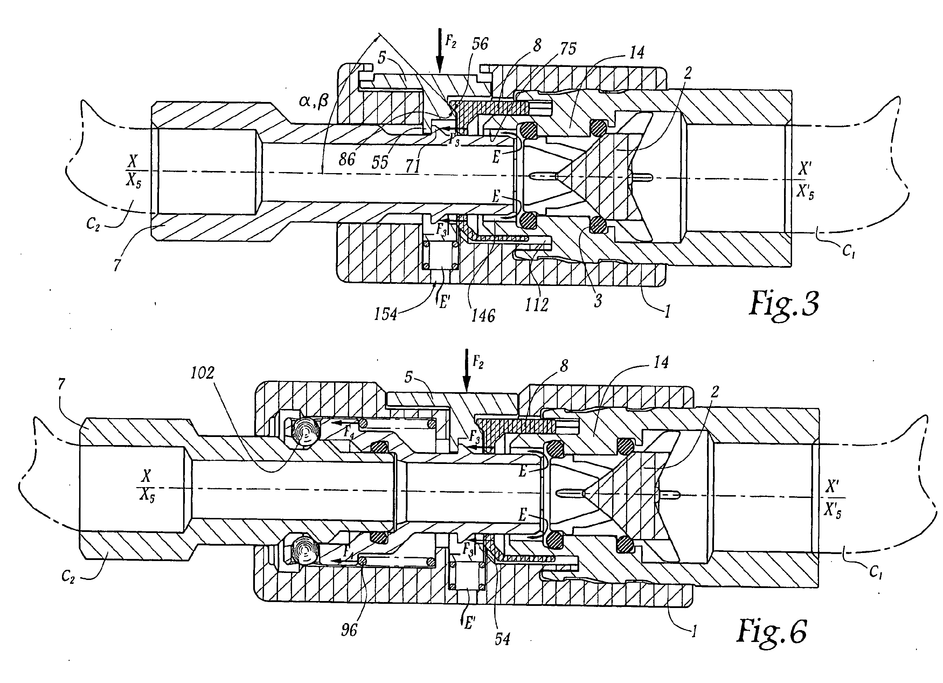

L'ouverture 82 a une forme et des dimensions voisines des dimensions transversales externes de la partie avant de l'embout 7. Ainsi, à partir de la configuration de la figure 2, le fluide sous pression se trouvant dans la canalisation C₂ s'écoule, comme représenté par les flèches E, autour de l'embout 7, dans un passage 146 formé entre la surface radiale interne de la pièce 14 et la surface radiale externe 75 de l'embout 7, au point que la pression du fluide présent dans la canalisation C₂ et dans l'embout 7 exerce sur le piston 8 un effort F₃ qui pousse le piston 8 en direction du verrou 5, pour atteindre la position de la figure 3.

Le verrou 5 est pourvu d'une surface 56 qui est en secteur de tronc de cône, centrée sur l'axe X₅-X'₅ et convergente en direction du clapet 4, c'est-à-dire de l'amont du raccord.

Le verrou 8 est, quant à lui, pourvu d'une surface 86 également en forme de secteur de tronc de cône, centrée sur l'axe X-X' et convergente en direction de l'amont du raccord. On note respectivement α et β les demi-angles au sommet de ces surfaces 56 et 86. Les angles α et β ont la même valeur qui est de l'ordre de 45°.

Les surfaces 56 et 86 pourraient avoir une géométrie autre qu'en secteur de tronc de cône. Il pourrait s'agir de parties de dents rectilignes complémentaires orthogonales à l'axe X-X' et pourvues d'une face oblique par rapport à celui-ci.

Le déplacement du verrou 5 sous l'effet de l'effort F₂ a pour effet d'aligner l'axe X₅-X'₅ sur l'axe X-X', de telle sorte que, sous l'effet de l'effort F₃, la surface 86 du piston 8 vient en appui contre la surface 56 du verrou 5, ce qui immobilise ce verrou dans la position de la figure 3 où il empêche la libération de l'embout 7 tant que l'effort F₃, généré par la pression régnant à l'intérieur de la canalisation C₂ et de l'embout 7, est supérieure à une valeur prédéterminée qui dépend de l'effort F₁, c'est-à-dire de la constante de raideur du ressort 6, et ce, indépendamment de l'effort F₂ qui peut alors être ou non exercé sur le bouton ou verrou 5.

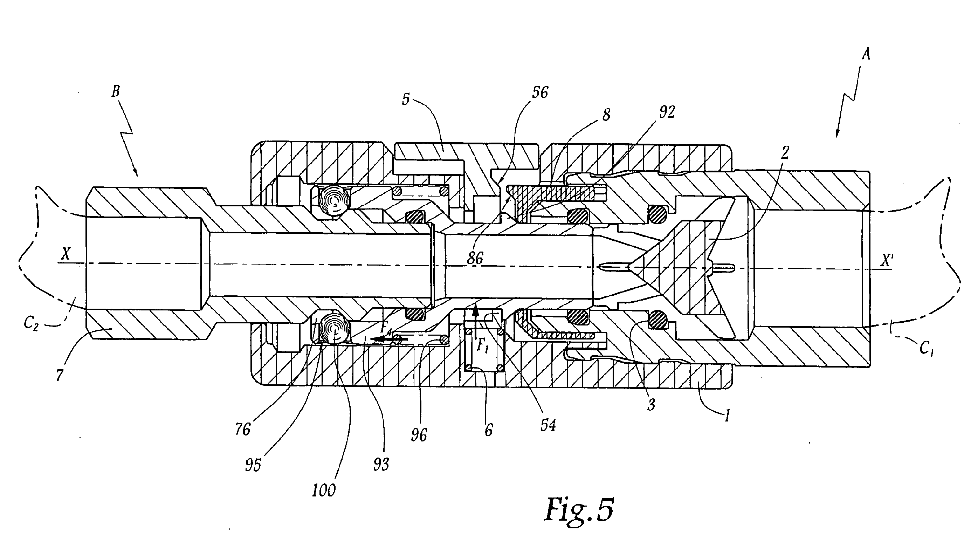

En pratique, des fuites se produisent à la jonction entre le bord de l'ouverture 82 et la surface 75 et autour de la jupe 81, ces fuites résultant dans un écoulement E' de gaz sous pression vers l'extérieur du logement 15, à travers l'orifice 154. Ainsi, la pression dans la canalisation C₁ et dans l'embout 7 diminue progressivement, de même que l'effort F₃ qui peut alors être vaincu par l'effort F₁ exercé par le ressort 6, ce qui entraîne alors un glissement des surfaces 56 et 86 l'une sur l'autre, le renvoi du piston 8 en direction du fond du logement 145 et la libération du verrou 5 qui atteint alors la position de la figure 4 où sa dent 55 ne s'oppose plus au retrait de l'embout mâle B par rapport à l'élément femelle A.

La surface 86 est formée par un nez 87 du piston 8 qui peut s'engager dans un renfoncement 57 prévu à cet effet sur le verrou 5.

Les mouvements de translation du piston 8 parallèlement à l'axe X-X' résultent des variations de pression dans le conduit 11 de l'effort de réaction transmis entre les surfaces 56 et 86, sans qu'il soit nécessaire d'utiliser un ressort de rappel, ce qui améliore la fiabilité du raccord et permet d'augmenter ses performances économiques.

Le caractère convergent vers l'amont des surfaces 56 et 86 permet le renvoi du piston vers le logement 145 sous l'effet de l'effort F₁ lorsque celui-ci vainc l'effort F₃.

La surface inclinée 56 du verrou 5 a une pente et une orientation telles qu'elles facilitent le dégagement du nez 87 porté par le piston 8 lors du mouvement du verrou 5. Suivant la géométrie et l'inclinaison des surfaces 56 et 86, le dégagement se fait plus ou moins facilement en fonction de la pression résiduelle restante, cela pour un même ressort 13. On peut ainsi « tarer » le raccord 1 pour que le désaccouplement soit possible à partir d'une pression interne résiduelle donnée.

Dans le second mode de réalisation de l'invention représenté aux figures 5 à 7, les éléments analogues à ceux du premier mode de réalisation portent des références identiques. Les éléments femelle A et mâle B de ce raccord sont destinés à s'emmancher axialement l'un dans l'autre et il est prévu, dans le corps 1 de l'élément femelle A un verrou 5 et un piston 8 similaires à ceux du premier mode de réalisation, ces organes étant pourvus de surfaces respectives 56 et 86 de blocage en configuration de purge ou de mise à l'air du volume interne de la canalisation aval C₂ et de l'embout mâle 7. Un ressort 6 exerce sur le verrou 5 un effort F₂ dirigé vers le haut sur les figures 5 à 7.

Une pièce intermédiaire 9 est logée dans le conduit principal du corps 1 de l'élément femelle et comporte une partie cylindrique pourvue d'une collerette 92, cette partie 91 ayant sensiblement la même géométrie externe que la partie avant du corps 7 du premier mode de réalisation. La pièce 9 comporte également une partie 93 de diamètre plus important que la partie cylindrique et définissant un logement de réception d'un embout mâle 7 du type de celui décrit dans le brevet FR-2 724 710.

La partie 93 est pourvue, sur sa circonférence, de plusieurs logements 95 de réception de billes 100 susceptibles d'être engagées dans une gorge périphérique 76 du corps 7 qu'elles retiennent alors en position dans la partie 93. Un ressort 96 exerce sur la pièce 9 un effort F₄ dirigé vers le débouché 111 du conduit 11.

Le fonctionnement est le suivant :

Dans la configuration de la figure 5, la dent 54 du verrou 5 maintient la pièce 9 en configuration de circulation de fluide à travers le raccord, l'effort F₄ exercé par le ressort 96 étant alors vaincu et les billes 100 étant alors en regard d'une partie cylindrique à génératrice rectiligne du conduit 11, de telle sorte qu'elles sont engagées dans la gorge 76 et retiennent l'embout 7 prisonnier.

Lorsqu'il convient de déverrouiller le raccord, un effort F₂ est exercé sur le verrou 5, ce qui a pour effet de dégager la dent 54 par rapport à la collerette 92 qui vient alors en appui contre la seconde dent 55 du verrou 5. Comme précédemment, sous l'effet de l'écoulement E du fluide sous pression, le piston 8 est déplacé par l'effort F₃ en direction du verrou 5, au point que sa surface 86 vient au contact de la surface correspondante 56 du verrou 5. L'effort F₄ dû au ressort 96 déplace légèrement la pièce 9 à l'intérieur du conduit 11, les billes 100 demeurant engagées dans la gorge 76 et retenant ainsi prisonnier l'embout 7.

Lorsque la pression dans la canalisation C₂ et dans les pièces 7 et 9 a diminué du fait des fuites organisées et représentées par l'écoulement E', le piston 8 libère le verrou 5 qui se déplace, sous l'effet de l'effort F₁ dû au ressort 6 vers la position de la figure 7 où la collerette 92 est libérée de la dent 55, ce qui a pour effet de laisser le ressort 96 pousser la pièce 9 en direction du débouché 111 du conduit 11. Les billes 100 sont ainsi amenées en regard d'une gorge radiale interne 121 ménagée dans le corps 1, ce qui permet d'extraire les billes 100 de la gorge 76 du corps 7 de l'embout B et de libérer ainsi cet embout.

Quel que soit le mode de réalisation considéré, les éléments constitutifs du raccord sont avantageusement réalisés dans un matériau métallique ou dans un matériau plastique résistant aux pressions du fluide à acheminer et choisi en fonction de la nature du fluide.

## Revendications

1. Raccord rapide pour la jonction amovible de deux canalisations (C₁,C₂) parcourues par un fluide sous pression, ledit raccord comprenant deux éléments mâle (B) et femelle (A) aptes à s'emmancher axialement l'un dans l'autre, le corps (1) de l'élément femelle (A) étant équipé d'un verrou (5) chargé par des moyens élastiques (6), monté à coulissement dans ledit corps (1) et percé d'une ouverture (53) pour l'emmanchement dudit élément mâle (B) ou d'une pièce (9) déplacée par ledit élément mâle (B), la paroi de l'ouverture (53) du verrou (5) étant équipée de dents (54,55) décalées l'une par rapport à l'autre le long d'un axe médian de ladite ouverture (53), alors que ledit élément mâle (B) ou ladite pièce (9) est pourvu d'un épaulement (72) apte à reposer sélectivement contre l'une desdites dents (54,55), **caractérisé en ce qu**'il comprend un organe de sécurité (8) mobile par rapport audit corps (1) dudit élément femelle (A); soumis à l'action de la pression exercée par le fluide et pourvu d'une surface (86) adaptée pour venir en appui sur une surface complémentaire (56) dudit verrou (5) et à bloquer le mouvement (Y-Y', F₁) dudit verrou à l'encontre desdits moyens élastiques (6).

2. Raccord selon la revendication 1, **caractérisé en ce que** ledit organe de sécurité (8) est mobile par rapport au corps (1) dudit élément femelle (A) essentiellement sous l'effet de la pression (F₃) exercée par le fluide (E) et sous l'effet d'un effort de réaction exercé par ledit verrou (5).

3. Raccord selon l'une des revendications précédentes; **caractérisé en ce que** lesdites surfaces (56, 86) ménagées respectivement sur l'organe de sécurité (8) et sur le verrou (5) sont inclinées (α, β) par rapport à la direction (X-X') de déplacement relatif des éléments mâle (B) et femelle (A) et par rapport à la direction (Y-Y') de coulissement dudit verrou dans le corps (1) de l'élément femelle.

4. Raccord rapide selon la revendication 3, **caractérisé en ce que** lesdites surfaces (56, 86) sont inclinées (α, β) vers un axe (X-X', X₅-X'₅) parallèle à l'axe longitudinal (X-X') dudit raccord en direction de l'amont dudit raccord.

5. Raccord rapide selon l'une des revendications précédentes, **caractérisé en ce que** ledit organe de sécurité est formé par un piston (8) se déplaçant selon une direction (X-X') globalement parallèle à la direction de déplacement relatif desdits éléments mâle (B) et femelle (A).

6. Raccord rapide selon la revendication 4, **caractérisé en ce que** ledit piston (8) comporte un orifice (82) adapté pour permettre le passage de l'élément mâle (B) ou de ladite pièce (9) déplacée par ledit élément mâle.

7. Raccord rapide selon l'une des revendications précédentes, **caractérisé en ce que** ledit moyen de rappel (6) du verrou (5) est adapté pour provoquer la séparation des surfaces (56, 86) en appui dudit verrou (5) et dudit organe de sécurité (8), lorsque la pression exercée par le fluide dans ledit raccord (1) est en deçà d'une valeur pré-établie.

8. Raccord rapide selon l'une des revendications précédentes, **caractérisé en ce que** le corps (1) dudit élément femelle (A) comprend une partie principale (12) dans laquelle est immobilisée une partie secondaire (14) de l'élément femelle (A) reliée à l'une (C₁) desdites canalisations (C₁, C₂), l'immobilisation se faisant par accrochage de crans (142, 143) portés par ladite partie secondaire avec des crans complémentaires (132, 133) portés par ladite partie principale (12).

9. Raccord rapide selon l'une des revendications précédentes, **caractérisé en ce qu**'il comprend une pièce intermédiaire (9) apte à recevoir le corps (7) dudit élément mâle (B) et pourvue de moyens (100) de verrouillage dudit corps, lesdits moyens étant aptes à libérer ledit corps lorsque ledit verrou (5) est déplacé sous l'effet (F₁) desdits moyens élastiques (6).

10. Raccord selon la revendication 9, **caractérisé en ce que** ladite pièce intermédiaire (9) est chargée élastiquement (F₄) vers une position où lesdits moyens de verrouillage (100) ne sont pas actifs.

## Claims

1. A quick connector for the disconnectable connection of two pipes (C₁, C₂) traversed by a pressurised fluid, said connector comprising two elements, male (B) and female (A), capable of fitting into one another axially, the body (1) of the female element (A) being equipped with a locking means (5) loaded by elastic means (6), which is mounted to slide in said body (1) and is provided with an opening (53) for fitting in said male element (B) or a part (9) displaced by said male element (B), the wall of the opening (53) of the locking means (5) being fitted with teeth (54, 55) offset relative to each other along a median axis of said opening (53), whereas the said male element (B) or said part (9) is provided with a shoulder (72) capable of resting selectively against one of said teeth (54, 55), **characterised in that** it comprises a security member (8) which is mobile relative to said body (1) of said female element (A) and is subject to the action of the pressure exerted by the fluid and provided with a surface (86) adapted to come to bear on a complementary surface (56) of said locking means (5) and to block the movement (Y-Y', F₁) of said locking means counter to said elastic means (6).

2. A connector according to Claim 1, **characterised in that** said security member (8) is mobile relative to the body (1) of said female element (A) essentially under the effect of the pressure (F₃) exerted by the fluid (E) and under the effect of a reaction force exerted by said locking means (5).

3. A connector according to one of the preceding claims, **characterised in that** said surfaces (56, 86) formed respectively on the security member (8) and on the locking means (5) are inclined (α, β) relative to the direction (X-X') of relative displacement of the male (B) and female (A) elements and relative to the direction (Y-Y') of sliding of said locking means in the body (1) of the female element.

4. A quick connector according to Claim 3, **characterised in that** said surfaces (56, 86) are inclined (α, β) towards an axis (X-X', X₅-X'₅) parallel to the longitudinal axis (X-X') of said connector towards the downstream side of said connector.

5. A quick connector according to one of the preceding claims, **characterised in that** said security member is formed by a piston (8) moving in a direction (X-X') which is overall parallel to the direction of relative displacement of said male (B) and female (A) elements.

6. A quick connector according to Claim 4, **characterised in that** said piston (8) comprises an orifice (82) suitable for allowing passage of the male element (B) or of said part (9) displaced by said male element.

7. A quick connector according to one of the preceding claims, **characterised in that** said return means (6) for the locking means (5) is adapted to bring about the separation of the bearing surfaces (56, 86) of said locking means (5) and said security member (8), when the pressure exerted by the fluid in said connector (1) is below a pre-established value.

8. A quick connector according to one of the preceding claims, **characterised in that** the body (1) of said female element (A) comprises a main part (12) in which is immobilised a secondary part (14) of the female element (A) connected to one (C₁) of said pipes (C₁, C₂), the immobilisation being brought about by hooking of catches (142, 143) borne by said secondary part with complementary catches (132, 133) borne by said main part (12).

9. A quick connector according to one of the preceding claims, **characterised in that** it comprises an intermediate part (9) suitable for receiving the body (7) of said male element (B) and provided with means (100) for locking said body, said means being capable of releasing said body when said locking means (5) is displaced under the effect (F₁) of said elastic means (6).

10. A connector according to Claim 9, **characterised in that** said intermediate part (9) is elastically loaded (F₄) towards a position in which said locking means (100) are not active.

## Patentansprüche

1. Schnellkupplung für die lösbare Verbindung von zwei von einem unter Druck stehenden Fluid durchströmten Leitungen (C₁,C₂), wobei die Kupplung ein Einsteckelement (B) und ein Aufnahmeelement (A) umfasst, die geeignet sind, axial einander gesteckt zu werden wobei der Körper (1) des Aufnahmeelementes (A) mit einem durch elastische Mittel (6) vorgespannten Riegel (5) ausgerüstet ist, der gleitend in dem Körper (1) montiert ist und von einer Öffnung (53) für die Aufnahme des Einsteckelementes (B) oder eines von dem Einsteckelement (B) verschobenen Teils (9) durchgegriffen ist, wobei die Wand der Öffnung (53) des Riegels (5) mit Zähnen (54,55) ausgerüstet ist, die zueinander längs einer Mittellachse der Öffnung (53) versetzt sind, während das Einsteckelement (B) oder das Teil (9) mit einer Schulter (72) versehen ist, die sich wahlweise gegen einen der Zähne (54, 55) abstützen kann, **dadurch gekennzeichnet, dass** sie ein in Bezug auf den Körper (1) des Aufnahmeelementes (A) bewegliches Sicherheitsabsperrorgan (8) umfasst, das der Wirkung des von dem Fluid ausgeübten Druck unterworfen ist und mit einer Fläche (86) versehen ist, die angepasst ist, um an einer komplementären Fläche (56) des Riegels (5) in Abstützung zu kommen und die Bewegung (Y-Y', F₁) des Riegels gegen die elastischen Mittel (6) zu blockieren.

2. Schnellkupplung nach Anspruch 1, **dadurch gekennzeichnet, dass** das Sicherheitsorgan (8) in Bezug auf den Körper (1) des Aufnahmeelements (A) hauptsächlich unter der Wirkung des von dem Fluid (E) ausgeübten Drucks (F₃) und unter der Wirkung der von dem Riegel (5) ausgeübten Reaktionskraft beweglich ist.

3. Schnellkupplung nach einem der vorhergehenden Ansprüche, **dadurch gekennzeichnet, dass** die jeweils an dem Sicherheitsorgan (8) und an dem Riegel (5) eingearbeiteten Flächen (56, 86) in Bezug auf die Richtung (X-X') der relativen Verschiebung des Einsteck-(B) und Aufnahmelements (A) und in Bezug auf die Gleitrichtung (Y-Y') des Riegels in dem Körper (1) des Aufnahmelementes geneigt (α,β) sind.

4. Schnellkupplung nach Anspruch 3, **dadurch gekennzeichnet, dass** die Flächen (56, 86) zu einer Achse (X-X', X₅-X'₅) parallel zur Längsachse (X-X') der Kupplung in stromaufwärtiger Richtung der Kupplung geneigt (α,β) sind.

5. Schnellkupplung nach einem der vorhergehenden Ansprüche, **dadurch gekennzeichnet, dass** das Sicherheitsorgan durch einen Kolben (8) gebildet wird, der sich entsprechend einer Richtung (X-X') verschiebt, die im wesentlichen parallel zu der Richtung der relativern Verschiebung des Einsteck-(B) und Aufnahmelementes (A) liegt.

6. Schnellkupplung nach Anspruch 4, **dadurch gekennzeichnet, dass** der Kolben (8) eine Öffnung (82) umfasst, die angepasst ist, um dem Durchgang des Einsteckelementes (B) oder des von dem Einsteckelement verschobenen Teils (9) zu gestatten.

7. Schnellkupplung nach einem der vorhergehenden Ansprüche, **dadurch gekennzeichnet, dass** das Rückstellmittel (6) des Riegels (5) geeignet ist, um die Trennung der sich abstützenden Flächen (56, 86) des Riegels (5) und des Sicherheitsorgans (8) hervorzurufen, wenn der von dem Fluid in der Kupplung (1) ausgeübten Druck über einem voreingestellten Wert liegt.

8. Schnellkupplung nach einem der vorhergehenden Ansprüche, **dadurch gekennzeichnet, dass** der Körper (1) des Aufnahmeelementes (A) einen Hauptteil (12) umfasst, in dem ein mit einer (C₁) der Leitungen (C₁, C₂) verbundenes Zweitteil (14) des Aufnahmeelements (A) festgelegt ist, wobei die Festlegung durch Verhaken von von dem Zweitteil getragenen Rastelementen (142, 143) mit von dem Hauptteil (12) getragenen komplementären Rastelementen (132, 133) realisiert ist.

9. Schnellkupplung nach einem der vorhergehenden Ansprüche, **dadurch gekennzeichnet, dass** sie ein Zwischenteil (9) umfasst, das geeignet ist, den Körper (7) des Einsteckelementes (B) aufzunehmen und das mit Mitteln (100) für eine Verriegelung des Körpers versehen ist, wobei die Mittel in der Lage sind, den Körper freizugeben, wenn der Riegel (5) unter der Wirkung (F₁) der elastischen Mittel (6) verschoben wird.

10. Schnellkupplung nach Anspruch 9, **dadurch gekennzeichnet, dass** das Zwischenteil (9) elastisch (F₄) in eine Position vorgespannt ist, in der die Verriegelungsmittel (100) nicht aktiv sind.
